# EUROPEAN PATENT APPLICATION

(11) **EP 0 717 574 A2**
(43) Date of publication of application: **19.06.1996**
(21) Application number: 95308698.0
(22) Date of filing: 01.12.1995
(51) Int. Cl.: H04Q 7/22

(54) **Emergency calling from a wireless telephone**

(30) Priority: 15.12.1994 US 356945
(71) Applicant: AT&T Corp., New York, NY 10013-2412 (US)
(72) Inventor: Rivera-Rodriguez, Miguel A., Naperville, Illinois 60563 (US)
(74) Representative: Johnston, Kenneth Graham

(57) **Abstract**

A wireless telephone having an emergency interface that is dedicated to emergency calling. The wireless telephone is preprogrammed so that, when this emergency interface is activated, the wireless telephone automatically dials the emergency number of the home cellular network, which could be a plurality of emergency numbers (those commonly used by wireless systems such as 911 and *999). When the emergency interface is activated, all security built into the wireless telephone is by-passed for one phone call. Additionally, a circuit is added to those wireless telephones so that power can be provided for a short period of time for the emergency call.

## Description

### Technical Field

This invention relates to the field of wireless telephones, and, more specifically, to the area of providing a wireless telephone with a new facility to automatically call an emergency number regardless of the state of the wireless telephone.

### Background of the Invention

Wireless (sometimes called "cellular") telephones have become a common part of everyday life. Such wireless telephones are found in the cars, pockets, purses, etc., of many people in all walks of life. These telephones can be (and have been) life-saving devices, in that they are frequently used to summons police, fire or ambulance to an emergency. The user of the wireless telephone, however, must be able and know how to operate the telephone (including how to turn the telephone on) and must know the emergency number of the particular wireless service provider in order for the wireless telephone to be of use in an emergency.

There are several distinct problems in using wireless telephones in an emergency. As mentioned above, the person using the telephone must know how to use it, and must also know the emergency telephone number is for the specific wireless service provider. This is a particular problem for those people who "roam" with their telephones (travel into service areas other than their home service area). Some service areas use 911 as the emergency number and some use *999. Other service providers may use other numbers. Frequently, people store the emergency number as a speed calling number, so that it can be dialed in one or two key strokes. Even if the emergency telephone number is stored in a speed calling list, the user must still know (or remember) how that specific telephone (or service provider) implements speed calling.

Furthermore, most wireless telephones have some form of security to prevent unauthorized use. Many telephones have firmware or software password protection; a user has to enter a password (security code) in order to make a call. In many car installations, there is a key lock which may be connected to the power circuit that has to be activated before a call can be made. All of these security measures have to be cleared before an emergency call can be placed.

All of the above-listed problems may prohibit use of the telephone if the owner is unable to bypass the security measures in case of emergency. If the owner of the telephone is not the user (for example, the owner is not present or is unable to use the telephone because of injury, etc.), then the wireless telephone is useless to other people in the area. Further, in an accident, the power may become disconnected to a car-installed wireless telephone, rendering it useless when it is needed most.

Therefore, a problem in the art is that there is no simple, intuitive way to make emergency calls from wireless telephones, especially when the caller is not the usual user of the telephone.

### Summary of the Invention

This problem is solved and a technical advance is achieved in the art by a wireless telephone that has a new user interface: a user interface that is dedicated to emergency calling. The new user interface may comprises something as simple as a button separate from the keypad, or as sophisticated as a voice activated system that recognizes the words "help" and/or "emergency." The wireless telephone is preprogrammed so that, when this user interface is activated, the wireless telephone automatically dials the emergency number of the home cellular network. Advantageously, a plurality of emergency numbers are stored (those commonly used by wireless systems, such as 911 and *999), wherein, if the wireless telephone is not in its home service region, each number can be tried until an emergency call is established. Alternatively, a service provider could cause the mobile telephone switching office or a cell site to recognize the most common emergency numbers (such as 911 and *999), translate the number into the local number, and complete the call.

According to this invention, when the emergency interface is activated, all security built into the wireless telephone is by-passed for one phone call. No password is necessary if the emergency interface is activated. Additionally, a circuit is added to those wireless telephones with secured power locks so that power can be provided for a short period of time for the emergency call. Such power may be provided by a capacitor circuit that is charged when the telephone is connected to a power source, or by short duration, rechargeable batteries. In this manner, the user does not even have to know how to turn the wireless telephone on. Advantageously, if the emergency interface is a button, the button is marked with a universally know symbol for emergency calls, so that anyone may recognize the button and make an emergency call from such a wireless telephone.

### Brief Description of the Drawings

A more complete understanding of the invention may be obtained from consideration of the following description in conjunction with the drawings, in which:
FIG. 1 is an illustration of a wireless telephone system in which an exemplary embodiment of this invention may be used;
FIG. 2 is a block diagram of the components of the wireless telephone of FIG. 1;
FIG. 3 is a flow chart of the operation of the wireless telephone of FIG. 2; and
FIG. 4 is a flow chart of the operation of a mobile telephone switching office of FIG. 1.

### DETAILED DESCRIPTION

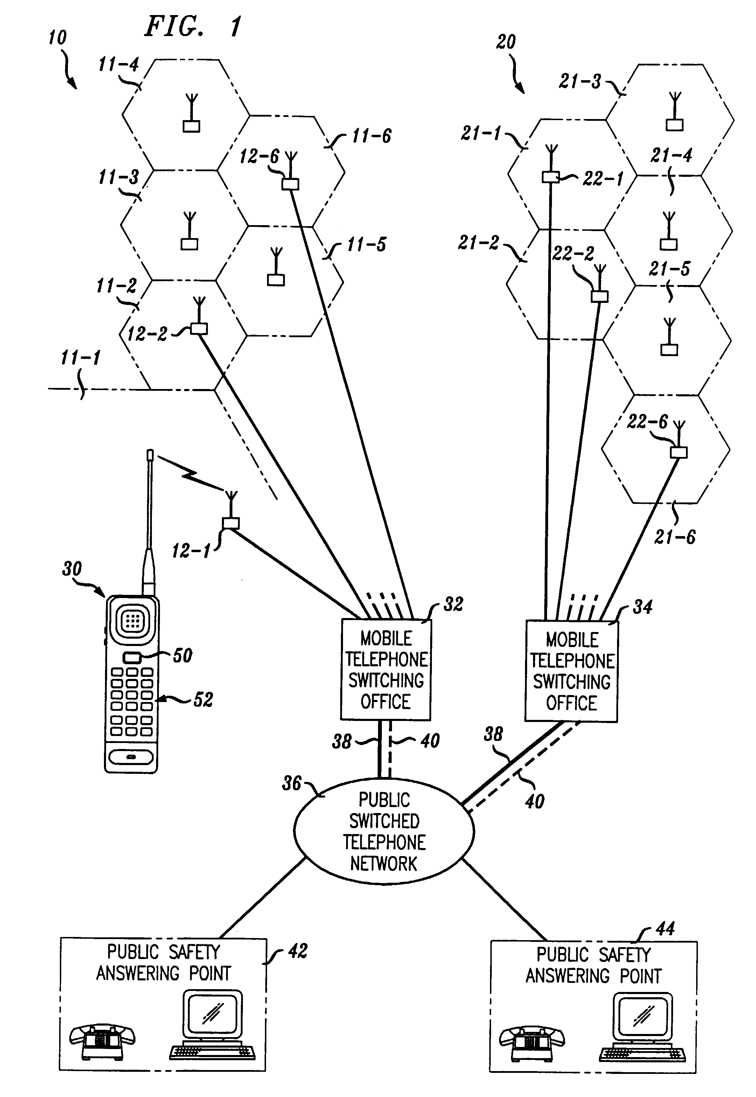

FIG. 1 is an illustration of a wireless telephone system in which an exemplary embodiment of this invention is used. In this illustration, there are two wireless service regions, 10 and 20. Each of the geographical areas served by regions 10 and 20 are divided in cells 11 and 21, respectively. There is a base station 12 and 22 in each of the cells. Base stations 12 and 22 provide radio and data communications with wireless devices, such as wireless telephone 30. Each base station 12 and 22 is connected to a mobile telephone switching office (MTSO) 32 and 34, respectively. MTSO's 32 and 34 are connected to the public switched telephone network (PSTN) 36 via trunks 38 and signaling channels 40. For purposes of illustration, wireless communications systems 10 and 20 each comprise an AT&T Autoplex® System 1000. Each base station 12 and 22 comprises an AT&T Autoples Series 2 Intelligent Base Station 2000. Mobile telecommunications switching systems in general are described in Warty, et al., U.S. Patent No. 4,827,499, which issued May 2, 1989. and is assigned to AT&T, and Joel, Jr., U.S. Patent 3,663,762, which issued May 16. 1972, and is assigned to AT&T. This wireless system is being described merely to illustrate the invention; the type of wireless system is not important. This invention will work in any analog or digital wireless system (such as a digital code division. multiple access system).

In the current art, the two telephone numbers "911" and "*999" are commonly used for emergency calls in wireless systems. For purposes of describing this invention, wireless system 10 uses 911 and wireless system 20 uses *999. Wireless telephone 30 is located in wireless system 10, in cell 11-1. When the user of wireless telephone 30 dials 911 conventionally, a call is set up between wireless telephone 30 and base station 12-1 in cell 11-1. Base station 12-1 sets up the call to MTSO 32. MTSO 32 recognizes the special code and performs a database translation to determine how to route the call. In this example, the call is routed through PSTN 36 to public safety answering point (PSAP) 42, which has previously been designated as the PSAP that handles emergency calls for wireless system 10. PSAP 42 comprises an ISDN-based PSAP, as described in Brozovich, et al., U.S. Patent No. 5,311,569, which issued May 10, 1994 to AT&T. Again, the exact type of PSAP is not important to this invention, as this invention will work with any PSAP. The user of telephone 30 may then converse with the attendant at PSAP 42 to describe the emergency.

Further, for purposes of illustration, suppose that the user of wireless telephone 30 moves into wireless service region 20. Wireless telephone 30 may operate in wireless service region 20 in what is known in the art as a "roaming" mode. MTSO 34 identifies wireless telephone 30 when it is turned on in wireless service region 20, wherein wireless telephone 30 may operate as if it were in its home region 10.

If the user of wireless telephone 30 needs to make an emergency call in wireless service region 20, he or she must know that the special code 911 does not work in service region 20 (otherwise, the call will not be completed). Once the proper code is entered (in this example *999), a call is set up through MTSO 34 to PSAP 44 via PSTN 36. In an emergency situation, the user of wireless telephone must be able to know all possible codes for emergency numbers.

Further, suppose that the user of wireless telephone 30 is injured and unable to use the telephone. If there is another person around, that person could use wireless telephone 30 to call the emergency number, provided, of course, that that person knows the emergency number for that service region. Additionally, if there are any software or hardware protection on wireless telephone 30 (i.e., password or keyed power protection, respectively), the other person must obtain assistance from the user/owner of wireless telephone 30 in order for the telephone to be useful. In many cases, unfortunately, a wireless telephone is useless in these and other similar situations, because of unfamiliarity and/or security issues.

According to the exemplary embodiment of this invention, therefore, there is an additional new button 50 on wireless telephone 30, which acts as an emergency interface. Advantageously, this button is clearly labeled as "EMERGENCY" and/or has a universally recognized symbol. Further, it is also advantageous that this button be separate from a normal keypad 52, so that it may be quickly and easily distinguished. Also, button 50 may be illuminated in some distinctive color, such as red, to further distinguish it from keypad 52. In this manner, anyone having access to wireless telephone 30 can determine the function of emergency button 50.

Alternatively, a voice response system may be present in place of button 50, or in addition to button 50 as the emergency interface. In this embodiment, the voice response system may be trained to recognize the words "help", "emergency" and/or other words that indicate a need to call the emergency PSAP 42 or 44. Further, a tone or infrared detector could be incorporated as part of the emergency interface. This detector is responsive to generated tones or infrared signals sent from a separate device (such as a key chain signal generator as is used in the current art for automobile alarms).

Further, when the emergency interface is activated, such as when button 50 is pushed or pressed, wireless telephone (as will be described further, below) automatically dials a stored emergency number which, as a default, is the emergency number of its home wireless service region (911 in this example). Any and all telephone security is bypassed, so that, if the person making the emergency call is not the main user/owner, that person does not have to obtain password or physical keys to report an emergency. By means of this invention, wireless telephone 30 fulfills its role as one of the most important safety devices of our times.

According to another aspect of this invention, when wireless telephone 30 "roams" from its home service region 10 to another service region, such as service region 20, it needs to be able to make emergency calls in that service region. To this end, MTSO 34 (and likewise all MTSO's such as 32) is, according to this invention, programmed to recognize all of the most-used emergency numbers. When MTSO 34 receives the emergency number from wireless telephone 30, it recognizes the emergency number, translates it to the local emergency number, and delivers the call to the appropriate PSAP 44. The translation of emergency number may alternatively be performed in cell site 12 or 22. Alternatively, when telephone 30 is first turned on in service region 20, service region 20 sends its emergency number (*999 in this example) to wireless telephone 30. Wireless telephone 30 then stores this number in special, non-volatile memory. Wireless telephone 30 can then access this memory whenever button 50 is pressed in lieu of its home area number. Additionally, wireless telephone 30 could be preprogrammed with all of the currently used emergency numbers. In this case, when emergency button 50 is pressed, wireless telephone 30 tries all of the numbers in a predetermined order until the emergency call is established. In this manner, an emergency call can be established in any service region with a simple push of a button.

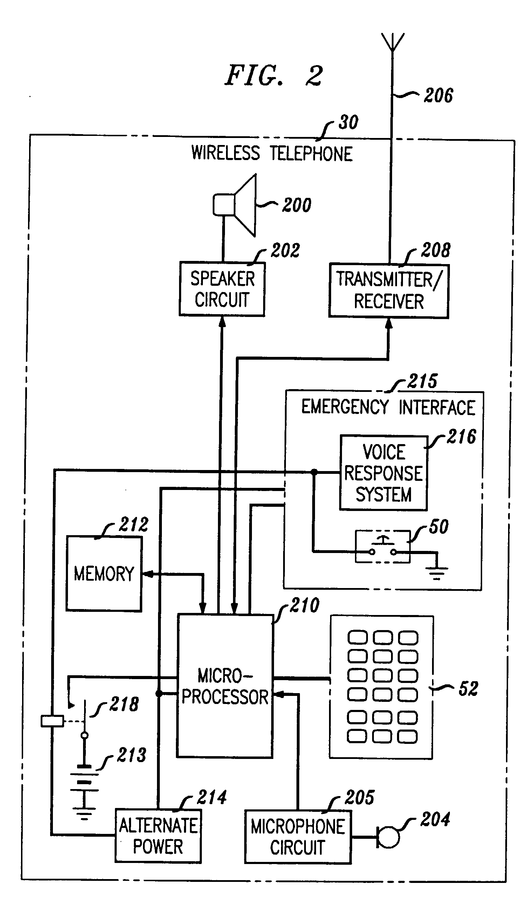

Turning now to FIG. 2, a block diagram of wireless telephone 30 according to the exemplary embodiment of this invention is shown. Wireless telephone 30 includes all of the features that are known in the art for such telephones. Wireless telephone 30 includes a speaker 200 and the electronics 202 to operate it, a microphone 204 and the electronics 205 to operate it. Further, wireless telephone 30 includes an antenna 206 and the electronics 208 to transmit/receive radio signals.

At the heart of wireless telephone 30 is a microprocessor 210. Microprocessor 210, as is known in the art, controls the functionality of wireless telephone 30. Microprocessor 210 is functionally connected to all of the components and to a memory device 212, in which microprocessor 210 stores programs to operate wireless telephone 30 and data used in such processing. Battery 213 supplies power to all of the electronic components in wireless telephone 30. The user enters telephone numbers, codes, etc., as is known in the art, on keypad 52.

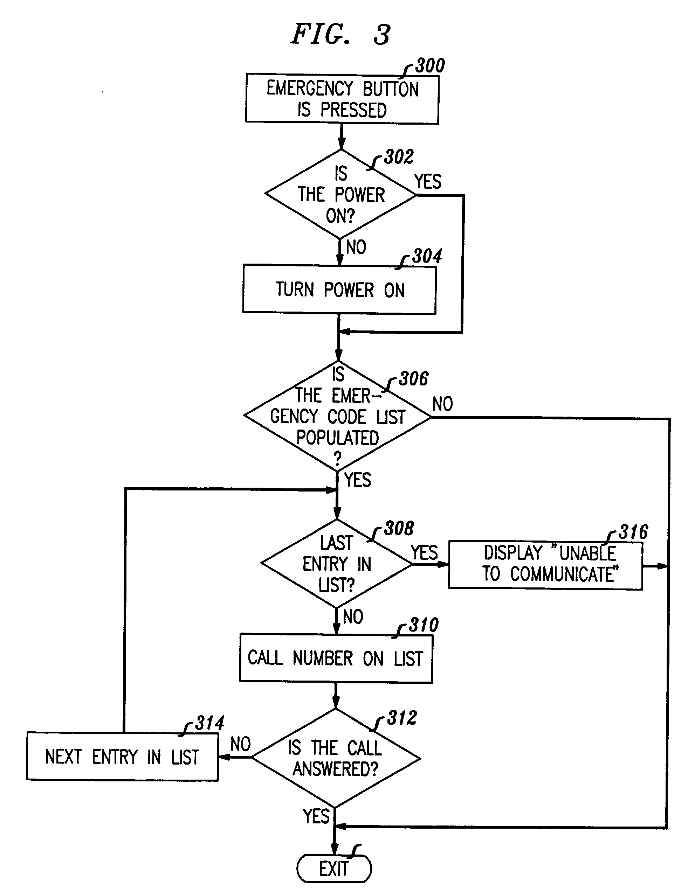

According to the exemplary embodiment of this invention, when emergency interface 215 is activated (that is, voice response system 316 recognizes an emergency keyword or button 50 is pushed), microprocessor 210 is informed and retrieves an emergency telephone number (or code) from an emergency code list in memory 212, according to a program described below in FIG. 3. If there is no answer, then microprocessor 210 tries again with another number. Alternatively, if wireless telephone 30 is in the roaming mode, microprocessor may retrieve the local emergency number from memory 212.

Power for operating emergency interface 215 is supplied from alternate power source 214 when wireless telephone 30 is turned off, so that the emergency interface 215 may be activated by anyone without having to know how to turn the telephone on. Further, a relay 218 is connected to power supply 213 which may be activated to turn on the main power supply when emergency interface 215 is activated. The amount of time that wireless telephone 30 may operate in the emergency mode may be limited by microprocessor 210, so that the normal security measures are not permanently circumvented. Additionally, when the power is turned on through the emergency interface 215, only emergency numbers will be dialed by microprocessor 210.

Since microprocessor 210 is responding to emergency interface 215, it does not perform any security checking against software passwords. It is also according to this invention that wireless telephone 30 can complete an emergency call when it is turned off. To this end, alternate power supply 214 hold enough power to complete a call and hold it up for at least three minutes. This should provide adequate time to determine the significant facts at a PSAP. Alternate power supply 214 comprises a small rechargeable battery or capacitor circuit. Each time that wireless telephone 30 is turned on, alternate power supply 214 is charged. In this manner, any security device, such as a key-locked power switch, may be bypassed for an emergency call, and the person making the emergency call does not even have to know how to turn wireless telephone 30 on. In a mobile telephone installed in a vehicle, a direct connection to the auto's battery could replace supply 214.

Turning now to FIG.3, the processing that occurs in microprocessor 214 of wireless telephone 30 when emergency button 50 is pressed is shown, according to an exemplary embodiment of this invention. Processing begins at action box 300, where emergency button 50 (FIG. 1) is pressed. Processing proceeds to decision diamond 302, where a determination is made whether the power to wireless telephone 30 is turned on. If the power is not on, then processing proceeds to action box 304 where the power is turned on by activating alternate power supply 214 (FIG. 2). Alternatively, the normal power supply (i.e., battery 213) may be turned on.

Processing proceeds to decision diamond 306, where a determination is made whether the emergency code list is populated. If there is no special code for a particular service region, the list will not be populated. If it is not, then processing proceeds to the exit box, 318. Alternatively, a call can be made to the operator, and the operator can connect the emergency call as required.

If there are emergency codes listed, then processing proceeds to action box 310, where a number on the list is called. Processing continues to decision diamond 312, where a determination is made whether the call is answered. If the call is answered, then processing exits at 318. If the call is not answered, then the next entry in the list is examined, and processing loops back to decision diamond 308. In this manner, all of the numbers in the list are tried until one is found that works or all numbers have been attempted. If no call can be completed, then processing proceeds to action box 316, where a message is displayed that wireless telephone 30 is unable to communicate with the service region's emergency system. Processing ends at 318.

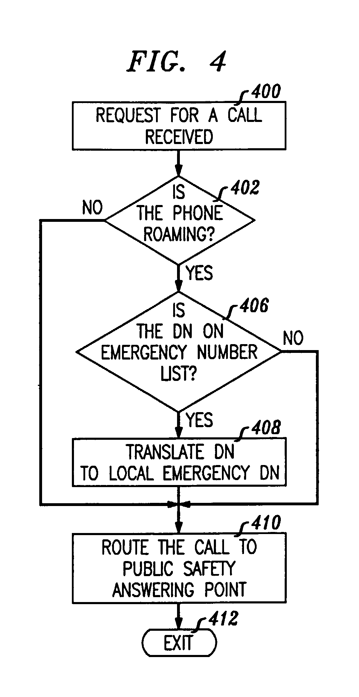

Turning now to FIG. 4, processing, as occurs in MTSO 34 when wireless telephone 30 is "roaming," is shown. Processing starts in action box 400, where a call is received from wireless telephone 30. A determination is made in decision diamond 402 whether wireless telephone 30 is roaming. Processing continues to decision diamond 406, where a determination is made whether the dialed number is an emergency number code. If, in decision diamond 406, the dialed number is an emergency code, then the code is translated to the local emergency code in action box 408. Processing proceeds to action box 410, where the call is routed, and processing ends at 412.

It is to be understood that the above-described embodiments are merely illustrative principles of the invention and that many variations may be devised by those skilled in the art without departing from the scope of the invention. It is, therefore, intended that such variations be included within the scope of the following claims.

## Claims

1. An improvement for a wireless telephone, said wireless telephone including a keypad for dialing said wireless telephone, said improvement comprising:
memory means, said memory means storing one or more emergency numbers;
dialing means for causing said wireless telephone to dial said emergency number stored in said memory means;
an emergency activation means connected to said dialing means for actuating said dialing means, wherein said emergency activation means solely actuates said dialing means, whereby an emergency call is made in response to said emergency activation means being activated.

2. An improvement according to claim 1 wherein said emergency activation means comprises a button separate from said keypad.

3. An improvement according to claim 1 wherein said emergency activation means comprises a voice response system which is responsive to predefined words for actuating said dialing means.

4. An improvement according to claim 1 wherein said memory means stores a plurality of emergency numbers and said dialing means serially dials each of said plurality of emergency numbers until a call is completed.

5. An improvement according to claim 1 wherein said wireless telephone further includes security means for preventing unauthorized use of said wireless telephone, said improvement further comprising means for bypassing said security means in response to activation of said emergency activation means without compromising functionality of said security means.

6. An improvement according to claim 5 wherein said means for bypassing said security means includes means for providing power to said wireless telephone.

7. An improvement according to claim 6 wherein said means for providing power comprises a battery.

8. An improvement according to claim 6 wherein said means for providing power comprises a capacitor circuit.
